# EUROPÄISCHE PATENTSCHRIFT

(11) **EP 3 953 204 B1**
(45) Veröffentlichungstag und Bekanntmachung des Hinweises auf die Patenterteilung: **28.06.2023**
(21) Anmeldenummer: 19832660.5
(22) Anmeldetag: 19.12.2019
(51) Int. Cl.: B60K 35/00, B60K 37/00, B60H 1/34

(54) **INSTRUMENTENTAFEL FÜR EIN KRAFTFAHRZEUG SOWIE KRAFTFAHRZEUG**
INSTRUMENT PANEL FOR A MOTOR VEHICLE, AND MOTOR VEHICLE
TABLEAU DE BORD POUR UN VÉHICULE À MOTEUR ET VÉHICULE À MOTEUR

(30) Priorität: 12.04.2019 DE 102019205309
(43) Veröffentlichungstag der Anmeldung: 16.02.2022
(73) Patentinhaber: VOLKSWAGEN AKTIENGESELLSCHAFT, 38440 Wolfsburg (DE)
(72) Erfinder: WILSDORF, Simone, 38442 Wolfsburg (DE); SCHRÖDER, Heiko, 38536 Meinersen (DE); KENDIK, Lukas, 38102 Braunschweig (DE); BOUGHANMI, Nesrine, 38440 Wolfsburg (DE)
(86) Internationale Anmeldenummer: PCT/EP2019/086297
(87) Internationale Veröffentlichungsnummer: WO 2020/207614

(56) Entgegenhaltungen:
- EP-A1- 2 479 047
- DE-T2- 69 201 081
- DE-T2- 69 516 981

## Beschreibung

Die Erfindung betrifft eine Instrumententafel für ein Kraftfahrzeug mit einer Mehrzahl von zu einem Innenraum des Kraftfahrzeugs gerichteten Luftauslässen, und mit zumindest einem Lichtauslass zur Projektion einer optischen Anzeige auf eine Windschutzscheibe des Kraftfahrzeugs. Die Erfindung betrifft weiterhin ein Kraftfahrzeug mit einer solchen Instrumententafel.

Luftauslässe, die in der Instrumententafel eines Kraftfahrzeugs angeordnet sind, gehören bei der Konstruktion von Kraftfahrzeugen seit langer Zeit zum Standard. Die Luftauslässe, die auch als Ausströmer bezeichnet werden können, dienen dabei dazu, um Luft, die je nach Bedarf erwärmt oder abgekühlt sein kann, in den Innenraum des Fahrzeugs strömen zu lassen. Zum einen kann dies im Rahmen einer Innenraumklimatisierung erfolgen, um eine für die Fahrzeuginsassen angenehme Temperatur und/oder Luftfeuchtigkeit einzustellen. Zum anderen können die Ausströmer verwendet werden, um konditionierte Luft entlang der Windschutzscheibe strömen zu lassen, um so ein Beschlagen oder Vereisen der Windschutzscheibe zu verhindern oder rückgängig zu machen, so dass die Insassen und insbesondere der Fahrer ein freies Sichtfeld durch die Windschutzscheibe hindurch haben.

Es ist üblich, jeweils rechts und links im Bereich der vorderen Türen bzw. Seitenscheiben jeweils einen Ausströmer anzuordnen. Zusätzlich sind oftmals ein oder zwei Ausströmer im Bereich der Mitte der Instrumententafel zwischen Fahrer und Beifahrer angeordnet. So stehen sowohl für den Fahrer- als auch für den Beifahrerbereich jeweils zwei Ausströmer zur Verfügung, die sich getrennt einstellen lassen. Neben diesen so genannten Personenanströmern sind im Regelfall weitere Ausströmer in der Nähe der Windschutzscheibe als sogenannte Defroster angeordnet.

Es ist aus dem Stand der Technik ebenfalls bekannt, in der Instrumententafel einen Lichtauslass anzuordnen, durch den von einer Projektionseinheit ausgesandtes Licht tritt und an der Windschutzscheibe derart reflektiert wird, dass es für einen Benutzer des Fahrzeugs, insbesondere für den Fahrer, wahrnehmbar wird. Im Regelfall ist dieser Lichtauslass zwischen dem Lenkrad und der Windschutzscheibe angeordnet und dient dazu, einen Auslass für das Licht eines so genannten "Head-Up-Displays", abgekürzt "HUD", zu bilden.

Ein solches HUD kann beispielsweise Fahrdaten, Navigationsdaten sowie Informationen zum Zustand des Fahrzeugs derart in das Blickfeld des Fahrers projizieren, dass sich diese mit der Straße und dem Verkehr überlagern, so dass der Fahrer seinen Blick nicht von der Straße abwenden muss, um die angesprochenen Informationen zu erhalten.

Üblicherweise ist der Lichtauslass für das HUD eine relativ große Öffnung, die wartungsanfällig ist und optisch oftmals nicht ansprechend wirkt. Es sind verschiedene Varianten der Integration von Lichtauslässen in die Instrumententafel bekannt. Dabei wird oftmals der Ansatz realisiert, den Lichtauslass mit dem Luftauslass in einer Öffnung zu kombinieren, so dass insgesamt weniger Öffnungen in der Instrumententafel vorhanden sind.

In der DE 692 01 081 T2 wird eine gemeinsame Öffnung als Lichtauslass und als Luftauslass genutzt. Dabei wird innerhalb der Öffnung eine im Wesentlichen vertikal ausgerichtete, transparente Stirnplatte zum Leiten von erwärmter Luft zum als Defroster wirkenden Luftauslass verwendet, so dass eine Enteisung der Windschutzscheibe im Bereich, auf den das durch den Lichtauslass tretende Licht auftrifft, möglich wird.

Die DE 695 16 981 T2 beschreibt eine Klimaanlage, die eine großflächige, in einem Armaturenbrett angeordnete luftdurchlässige Fläche aufweist. Die Luftdurchlässigkeit ergibt sich durch Verwendung einer Vielzahl von laminaren Elementen, die derart geneigt sind, dass einfallende Lichtstrahlung in Richtung der Windschutzscheibe reflektiert wird. Es wird die Möglichkeit beschrieben, ein HUD hinter der luftdurchlässigen Fläche anzuordnen. Aufgrund des kleinen Querschnitts der Öffnungen ist hier mit deutlich eingeschränkten Möglichkeiten bezüglich Größe und Qualität des von dem HUD erzeugten Bildes zu rechnen.

In der EP 2 479 047 A1 wird eine Anordnung vorgeschlagen, bei der ebenfalls eine gemeinsame Öffnung als Lichtauslass und als Luftauslass für einen Defroster verwendet wird. Die Projektionseinheit ist dabei nicht wie üblich unterhalb der Öffnung angeordnet, sondern strahlt das Licht im Wesentlichen Horizontal in schmale, die Öffnung in Fahrzeuglängsrichtung durchquerende Lichtleitelemente ab, aus denen das Licht dann in Richtung der Windschutzscheibe ausgekoppelt werden soll.

Die Aufgabe der vorliegenden Erfindung besteht daher darin, eine Instrumententafel der eingangs genannten Art anzugeben, bei der ein optisch ansprechender Eindruck bei gleichzeitiger guter Funktionalität sowohl der Klimatisierungseinrichtung als auch des HUDs gegeben ist.

Zur Lösung des Problems wird erfindungsgemäß eine gattungsgemäße Instrumententafel vorgeschlagen, bei der die Luftauslässe zusammen mit dem zumindest einen Lichtauslass ein durchgängiges, optisch homogenes Ausströmerband bilden, wobei die Luftauslässe als Personenanströmer ausgestaltet sind. Weiterhin wird ein Kraftfahrzeug mit einer solchen Instrumententafel vorgeschlagen.

Gemäß einer vorteilhaften Ausgestaltung sind in einer Fahrzeugquerrichtung gesehen beidseitig von dem Lichtauslass Luftauslässe angeordnet. Es wird so der Abstand zwischen den einzelnen Luftauslässen minimiert. Wenn an beiden Seiten des Lichtauslasses angrenzend Luftauslässe angeordnet sind, ist der Abstand offensichtlich minimal. Durch die Integration sowohl der Luftauslässe als auch des Lichtauslasses in das gemeinsame Ausströmerband können die unterschiedlichen Auslässe direkt aneinander grenzen, ohne, dass der optische Eindruck negativ beeinflusst würde.

Um ein qualitativ hochwertiges Bild bei Verwendung eines Head-Up-Displays zu erhalten, kann es vorteilhaft sein, wenn der Lichtauslass einen freien Querschnitt von wenigstens 40 cm², von wenigstens 60 cm² oder von wenigstens 80 cm² aufweist. Es kann dann eine Projektionseinheit mit einem entsprechend großen Querschnitt des abgestrahlten Bildes verwendet werden, was zu einer besseren Bildqualität führt.

Gemäß einer Weiterbildung der Erfindung nimmt das Ausströmerband zumindest 50%, bevorzugt zumindest 65% und besonders bevorzugt zumindest 80% der Breite der Instrumententafel ein. Es wird so erreicht, dass das Ausströmerband als integraler Bestandteil des Innenraums wahrgenommen wird, wodurch die Wahrnehmung der einzelnen Funktionen des Ausströmerbands etwas in den Hintergrund gedrängt wird. In einer speziellen Ausgestaltung kann die Länge des Ausströmerbandes größer als die Breite der Instrumententafel sein. In diesem Fall ist das Ausströmerband an zumindest einem seiner Enden derart geschwungen, dass es sich zumindest teilweise in Fahrtrichtung erstreckt.

Eine gute Funktionalität sowohl der Luftauslässe als auch des Lichtauslasses ist gewährleistet, wenn das Ausströmerband in Fahrtrichtung eine Ausdehnung von nicht mehr als 5 cm hat. Abhängig von der Art des verwendeten HUDs kann auch eine minimale Ausdehnung des Ausströmerbands in Fahrtrichtung z.B. 5 cm, 10 cm oder 20 cm betragen. Unter der Ausdehnung in Fahrtrichtung wird dabei insbesondere eine Ausdehnung senkrecht zur Querrichtung des Fahrzeugs verstanden. Dabei wird auf die Ausdehnung der Öffnung selbst abgestellt. Es wird hier also nicht die Projektion der Öffnung in Fahrtrichtung auf eine horizontale Ebene betrachtet, sondern es wird die reale Länge beispielsweise eines Rahmenelements, das sich senkrecht zur Fahrtrichtung erstreckt, betrachtet. Ein solcher Abschnitt eines Rahmenelements kann dabei auch einen Winkel mit der horizontalen Ebene einschließen.

Wenn der Lichtauslass und die Luftauslässe einen gemeinsamen umlaufenden Rahmen aufweisen, der sie zu der Oberfläche der Instrumententafel hin begrenzt, ergibt sich ein optisch besonders homogenes Bild. Der Lichtauslass und die Luftauslässe werden dann besonders als eine Einheit wahrgenommen.

Ebenfalls ist es möglich, dass sowohl die Luftauslässe als auch der Lichtauslass separate, umlaufende Rahmen aufweisen. Die Größe des Rahmens des Lichtauslasses kann dabei zumindest im Wesentlichen gleich der Größe des Rahmens zumindest eines Luftauslasses sein. Mit anderen Worten sind die Rahmen dann derart ausgestaltet, dass auf den ersten Blick der Lichtauslass weder anhand von Größe, Form, Farbe oder anhand der sonstigen Beschaffenheit des Rahmens von einem Luftauslass unterschieden werden kann.

Ein ähnliches Ergebnis kann erzielt werden, wenn der Lichtauslass und die Luftauslässe farblich und/oder vom Material her aufeinander abgestimmt sind. Diese Maßnahme kann mit dem zuvor erwähnten einheitlichen Rahmen kombiniert werden. Dabei können selbstverständlich auch Material und/oder Farbgebung des Rahmens an Material und/oder Farbgebung der Instrumententafel und/oder an Material und/oder Farbgebung der eigentlichen Luft- bzw. Lichtauslässe angepasst werden.

Eine bevorzugte Ausgestaltung sieht vor, dass das Ausströmerband zumindest näherungsweise achsensymmetrisch zur Fahrzeugmittelachse ausgestaltet ist. Mit anderen Worten entspricht die linke Hälfte des Ausströmerbands optisch zumindest im Wesentlichen der rechten Hälfte. Dies kann beispielsweise dadurch erreicht werden, dass auf der Beifahrerseite ein Ausströmer oder ein Fake-Ausströmer angeordnet ist, der in Position und Optik dem auf der Fahrerseite angeordneten Lichtauslass entspricht.

Bevorzugt ist das Ausströmerband derart ausgestaltet, dass der Lichtauslass die gleiche Ausdehnung in einer Fahrtrichtung aufweist wie die Luftauslässe. Es ist ebenfalls möglich, dass sich die Ausdehnung des Ausströmerbandes in Fahrtrichtung über die Breite des Ausströmerbandes hinweg zumindest abschnittsweise kontinuierlich ändert. So kann beispielsweise das Ausströmerband in einem zentralen Bereich seine größte Ausdehnung in Fahrtrichtung aufweisen und sich zur rechten und linken Fahrzeugseite hin verjüngen.

Eine spezielle Ausführungsform sieht vor, dass der Lichtauslass eine größere Breite (quer zur Fahrtrichtung) als die Luftauslässe hat. Typischerweise erfordert ein HUD eine größere Öffnung, mit anderen Worten also eine Öffnung mit einem größeren Querschnitt, als ein Luftauslass. Insbesondere wenn die Ausdehnung der Luftauslässe in Fahrtrichtung gleich der Ausdehnung des Lichtauslasses in Fahrtrichtung ist, kann auf diese Weise ein funktionaler Lichtauslass dargestellt werden. Darunter, dass die Ausdehnung der Luftauslässe in Fahrtrichtung gleich der Ausdehnung des Lichtauslasses in Fahrtrichtung ist, kann dabei insbesondere verstanden werden, dass die jeweiligen Ausdehnungen an den aneinander angrenzenden Seiten von Lichtauslass und Luftauslass gleich sind. Die Ränder des Ausströmerbandes verlaufen dann also quer zur Fahrtrichtung in einer stetigen Kurve oder Gerade.

Es ist mit Vorteil vorgesehen, dass die optische Anzeige ein holographisches HUD (Head-Up-Display) ist. Solche HUDs haben den Vorteil, dass sie relativ klein und kompakt sind. Wie es bei einem solchen HUD üblich ist, kann zweckmäßigerweise ein holographisch-optisches Element in die Windschutzscheibe integriert sein.

Gemäß einer bevorzugten Ausgestaltung sind die Luftauslässe Personenanströmer. Personenanströmer, die zur Klimatisierung des Fahrzeuginnenraums verwendet werden, sind in der Regel Luftauslässe mit im Verhältnis zu Defrostern relativ großen Querschnitten, die insbesondere im direkten Sichtfeld der Benutzer des Fahrzeugs angeordnet sind. Es ist daher bei den Personenanströmern besonders wichtig, ein optisch ansprechendes Bild zu erreichen, wozu die Kombination mit dem Lichtauslass in einem gemeinsamen Ausströmerband besonders geeignet ist.

Gemäß einer Weiterbildung der Erfindung bildet eine Oberfläche des Lichtauslasses mit der Horizontalen einen Winkel zwischen 35° und 90°, bevorzugt zwischen 50° und 90° und besonders bevorzugt zwischen 55° und 80°. Zum einen wird dadurch bewirkt, dass sich die Luftauslässe besonders gut als Personenanströmer verwenden lassen. Zum anderen kann unter bestimmten Anstellwinkeln und insbesondere bei einer annähernd vertikalen Ausrichtung der Lichtöffnung darauf verzichtet werden, eine so genannte Glare Trap, also eine transparente Platte, die im Luftraum zwischen der Projektionseinheit und dem Lichtauslass angeordnet ist und den Projektor u.a. vor Fremdkörpern schützt, zu verwenden.

Weiterhin kann es vorteilhaft sein, wenn eine Oberfläche des Lichtauslasses mit einer Windschutzscheibe einen Winkel zwischen 10° und 90°, bevorzugt zwischen 20° und 60°, besonders bevorzugt zwischen 20° und 40° bildet. Es ergibt sich dann ein vorteilhafter Winkel für die Reflexion des von der Projektionseinheit abgestrahlten Bildes durch die Windschutzscheibe zum Benutzer hin. In Spezialformen kann auch ein relativ steiler Winkel, der zwischen 45° und 90°, bevorzugt zwischen 60° und 85° liegt, vorteilhaft sein.

Gemäß einer optisch besonders ansprechenden Ausgestaltung erstreckt sich das Ausströmerband an den äußeren Rändern in Richtung Fahrzeugheck hin ist. Mit anderen Worten weist das Ausströmerband bzw. die gesamte Instrumententafel von oben gesehen insbesondere in den Außenbereichen eine Krümmung auf. Es wird so ein dynamischer optischer Eindruck erzeugt. Darüber hinaus wird so die Länge des gesamten Ausströmerbands vergrößert, so dass sich besonders flexibel unterschiedliche Luftauslässe über das Ausströmerband verteilen lassen, was zu Vorteilen bei der Klimatisierung des Innenraums führt. Die Länge des Ausströmerbands wird hierbei in Fahrzeugquerrichtung, also senkrecht zur Fahrtrichtung, gemessen.

Gemäß einer bevorzugten Weiterbildung der Erfindung ist die Instrumententafel derart ausgestaltet, dass eine zum Innenraum des Kraftahrzeugs weisende Oberfläche der Instrumententafel einen ersten, auf einer zur Windschutzscheibe weisenden Seite des Ausströmerbandes angeordneten Abschnitt und einen zweiten, auf einer zum Innenraum weisenden Seite des Ausströmerbandes angeordneten Abschnitt aufweist, wobei zwischen dem ersten Abschnitt und dem zweiten Abschnitt das Ausströmerband oder ein dritter Abschnitt, in den das Ausströmerband integriert ist, angeordnet ist, und wobei die Oberflächen der Luftauslässe und/oder die Oberfläche des Lichtauslasses jeweils einen steileren Winkel mit der Horizontalen bilden, als der erste Abschnitt und der zweite Abschnitt. Auch hierdurch wird erreicht, dass die Luftauslässe sich als Personenanströmer verwenden lassen. Gleichzeitig verläuft ein Großteil der Instrumententafel in näherungsweise vertikaler Richtung, wie es auch bisher oftmals üblich ist.

Neben dem Lichtauslass und weiteren Luftauslässen können auch sogenannte "Fake-Ausströmer" in dem Ausströmerband angeordnet sein. Diese zeichnen sich dadurch aus, dass sie optisch einem Ausströmer bzw. einem Luftauslass entsprechen oder zumindest ähneln, aber nicht dessen Funktion aufweisen. Es handelt sich entsprechend um ein funktionsloses Bauteil, das den optischen Eindruck erweckt, es handele sich um einen Ausströmer. Solche Fake-Ausströmer können verwendet werden, um einen optisch homogenen Eindruck zu erzeugen.

Ebenfalls ist es möglich, den Lichtauslass ebenfalls als Luftauslass zu verwenden. In der bevorzugten Standardausführung hat der Lichtauslass allerdings exklusiv die Funktion als Lichtauslass und wird nicht als Luftauslass verwendet.

Ausführungsbeispiele der Erfindung werden anhand der Zeichnungen und der nachfolgenden Beschreibung näher erläutert. Es zeigen:
- Fig. 1:: ein erstes Ausführungsbeispiel einer erfindungsgemäßen Instrumententafel in einer Draufsicht,
- Fig. 2:: das erste Ausführungsbeispiel in einer Ansicht von schräg oben,
- Fig. 3:: das erste Ausführungsbeispiel in einer Seitenansicht,
- Fig. 4:: eine schematische Darstellung einer erfindungsgemäßen Instrumententafel in einem Längsschnitt auf Höhe des Lenkrads, und
- Fig. 5:: eine schematische Darstellung einer erfindungsgemäßen Instrumententafel in einem Längsschnitt auf Höhe des Beifahrersitzes.

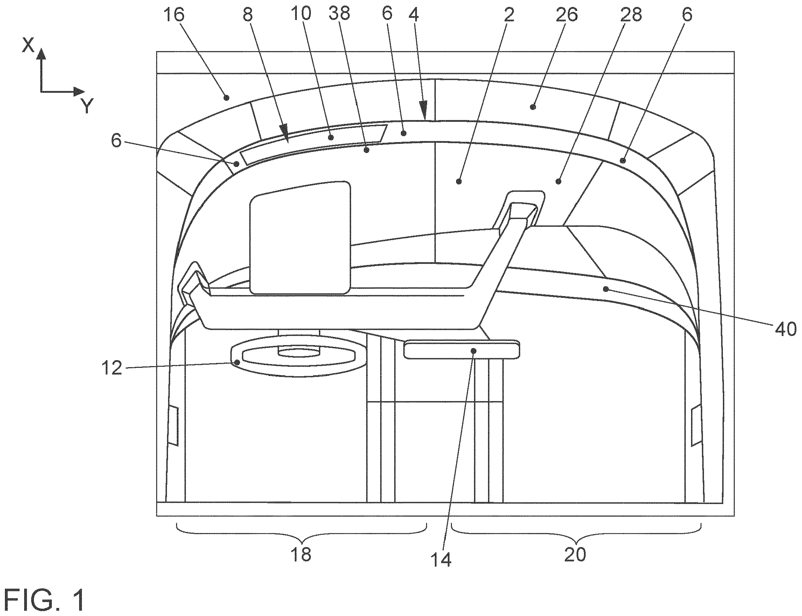

Figur 1 zeigt ein erstes Ausführungsbeispiel einer erfindungsgemäßen Instrumententafel 2 in einer Draufsicht. Die Instrumententafel 2 weist dabei einen ersten, windschutzscheibenseitigen Abschnitt 26 sowie einen zweiten, innenraumseitigen Abschnitt 28 auf. Zwischen dem ersten Abschnitt 26 und dem zweiten Abschnitt 28 ist das Ausströmerband 4 angeordnet. Das Ausströmerband 4 erstreckt sich über die gesamte Breite des Fahrzeuginnenraums und verläuft in seinen Außenabschnitten in einer gebogenen, spitz zulaufenden Form, sodass es sich an den äußeren Enden nahezu in Fahrtrichtung erstreckt. Das Ausströmerband 4 weist mehrere Luftauslässe 6 sowie einen Lichtauslass 8 auf. Der Lichtauslass 8 ist dabei in einem Bereich des Ausströmerbands 4 hinter dem Lenkrad 12, mit anderen Worten also im Fahrerbereich 18, angeordnet. Der Lichtauslass 8 weist eine im Wesentlichen rechteckige Grundform auf, die durch die leicht geschwungene Grundform des Ausströmerbands 4 jedoch leicht von einem idealen Rechteck abweicht. Im Beifahrerbereich 20 sind mehrere Luftauslässe 6 angeordnet. So kann beispielsweise zumindest ein Luftauslass 6 im äußeren, in der Figur im rechten Bereich angeordneten Abschnitt des Beifahrerbereichs 20 angeordnet sein. Im zentralen Bereich, der sich im Wesentlichen hinter dem Kommunikationssystem 14 befindet, können zumindest zwei Luftauslässe 6 angeordnet sein, von denen jeweils einer für die Klimatisierung des Fahrerbereichs 18 und des Beifahrerbereichs 20 verwendet werden kann.

Durch den Lichtauslass 8 kann das Bild eines Head-Up-Displays an die Windschutzscheibe 16 projiziert werden. Der Lichtauslass 8 wird von einer transparenten Abdeckung 10 verschlossen, die auch als so genannte Glare Trap bezeichnet werden kann. Das Ausströmerband 4 weist darüber hinaus an mehreren Stellen Luftauslässe 6 auf, mithilfe derer der Fahrzeuginnenraum klimatisiert und/oder erwärmte Luft derart zur Windschutzscheibe 16 geleitet werden kann, dass die Windschutzscheibe 16 von Kondenswasser oder Vereisungen befreit wird.

Die Bereiche des Ausströmerbands 4, in denen sich weder ein Luftauslass 6 noch der Lichtauslass 8 befinden sind optisch identisch zu den Luftauslässen 6 gestaltet, sodass diese Bereiche auch als Fake-Ausströmer bezeichnet werden können. Der Lichtauslass 8 weist einen großen offenen Querschnitt auf. Mit anderen Worten wird die Öffnung vorzugsweise nicht von Streben, Lamellen oder ähnlichem unterbrochen. Um hierbei zu erreichen, dass der Lichtauslass 8 einen optisch ähnlichen Eindruck auf einen Betrachter macht, wie die Luftauslässe 6 können die luftleitenden Elemente, die in einem Luftauslass 6 typischerweise angeordnet sind und oftmals eine lamellenartige Form haben, um zumindest 0,5 cm oder zumindest 1 cm, bevorzugt um eine Distanz von 1 bis 2 cm, senkrecht zur Oberfläche des Ausströmerbands 4 nach hinten versetzt sein. Mit anderen Worten sind die angesprochenen Lamellen dann um die angesprochene Distanz weiter vom Fahrzeuginnenraum entfernt, als die Oberfläche des Ausströmerbands 4. Die Lamellen entziehen sich so zu einem gewissen Grad dem Blick und der Aufmerksamkeit der Fahrzeuginsassen, sodass der optisch einheitliche Eindruck des gesamten Ausströmerbands 4 verstärkt wird.

Alternativ kann das Ausströmerband 6 einen umlaufenden Rahmen 38 oder eine umlaufende Blende aufweisen, die ein wenig, beispielsweise etwa 0,5 cm oder etwa 1 cm, in den Fahrzeuginnenraum hineinragen. Der erzielte optische Effekt ist dabei ähnlich.

In der Figur sind eine X-Achse und eine Y-Achse eingezeichnet. Die Richtung X entspricht dabei der Fahrzeuglängsrichtung bzw. der Fahrtrichtung und die zur Richtung X senkrecht stehende Richtung Y entspricht der Fahrzeugquerrichtung. Gemeinsam spannen die Richtung X und die Richtung Y die horizontale Ebene auf. Die in späteren Figuren ebenfalls eingezeichnete Richtung Z entspricht der Vertikalen und gibt somit jeweils eine Höhe an. Wenn beispielsweise im Folgenden von einem mit der Horizontalen gebildeten Winkel gesprochen wird, so ist dies äquivalent mit einem mit der X-Y-Ebene gebildeten Winkel.

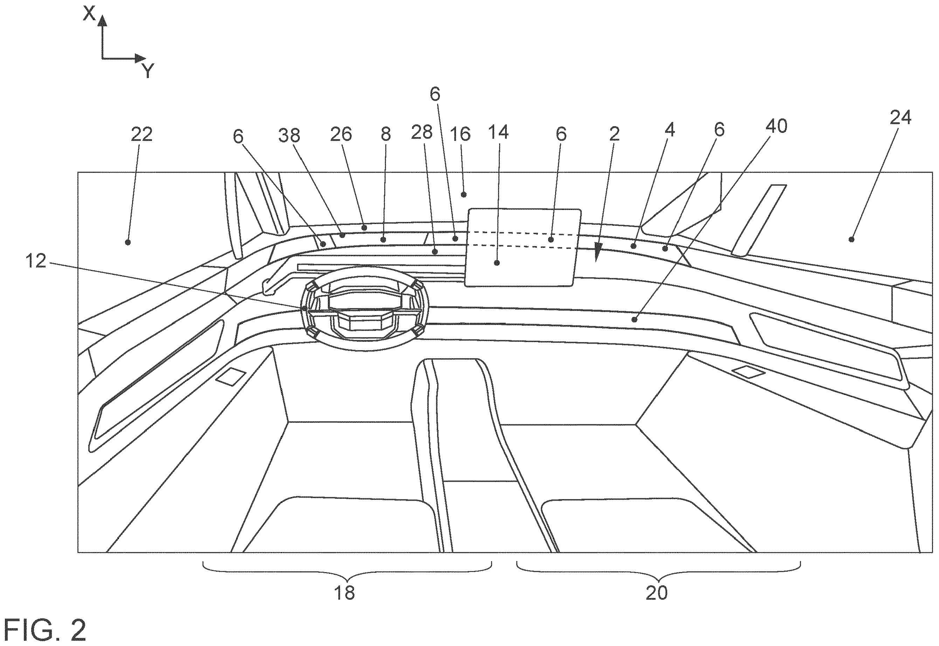

Figur 2 zeigt das erste Ausführungsbeispiel in einer Ansicht von schräg oben. Es sind wiederum die Instrumententafel 2, das Ausströmerband 4, die Luftauslässe 6, der Lichtauslass 8, das Kommunikationssystem 14, das Lenkrad 12, die Windschutzscheibe 16, der Fahrerbereich 18, der Beifahrerbereich 20, der erste Oberflächenabschnitt 26 der Instrumententafel 2, der zweite Oberflächenabschnitt 28 der Instrumententafel 2 und der Rahmen 38 zu erkennen. Es ist weiterhin erkennbar, dass das Ausströmerband 4 auf einer Höhe kurz unterhalb der Windschutzscheibe 16 angeordnet ist. Ebenfalls sind die linke Seitenscheibe 22 und die Rechte Seitenscheibe 24 der Fahrer- bzw. Beifahrertür dargestellt. In einem Bereich unterhalb des Kommunikationssystems 14 ist ein unteres Ausströmerband 40 angeordnet, das in der optischen Anmutung an das Ausströmerband 4 angepasst ist und weitere Ausströmer bzw. Luftauslässe aufweisen kann.

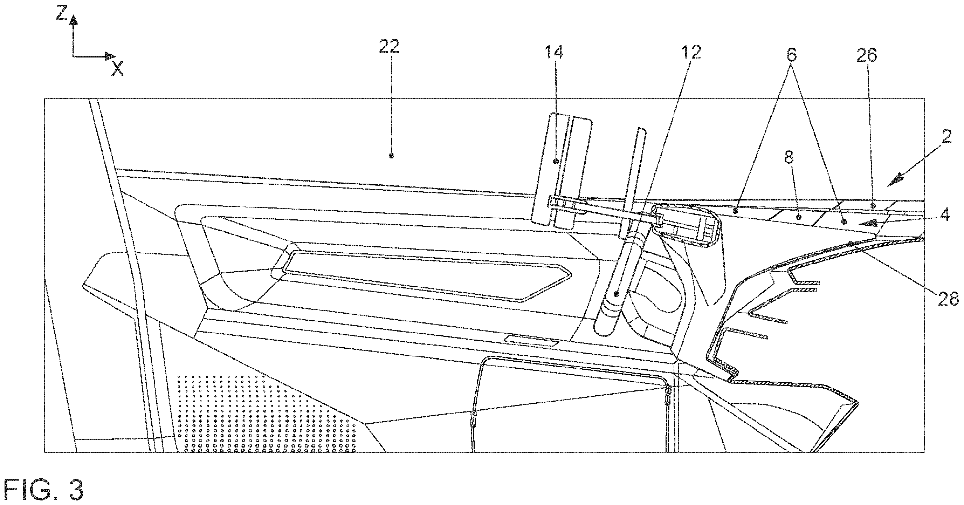

Figur 3 zeigt das erste Ausführungsbeispiel in einer Seitenansicht. Es sind wiederum die Instrumententafel 2, das Ausströmerband 4, Luftauslässe 6, der Lichtauslass 8, das Lenkrad 12, das Kommunikationssystem 14 sowie die linke Seitenscheibe 22 dargestellt. In dieser Figur ist besonders gut zu erkennen, dass der erste Oberflächenabschnitt 26 der Instrumententafel 2, das Ausströmerband 4 und der zweite Oberflächenabschnitt 28 der Instrumententafel 2 unterschiedliche Winkel mit der Horizontalen einschließen. Der erste Oberflächenabschnitt 26 und der zweite Oberflächenabschnitt 28 verlaufen dabei zur Fahrzeugfront hin leicht ansteigend, aber nahezu horizontal. Sie schließen mit der Horizontalen einen Winkel von beispielsweise 0° bis 20° oder von beispielsweise 10° bis 30° ein. Der erste Oberflächenabschnitt 26 und der zweite Oberflächenabschnitt 28 können dabei den gleichen Winkel mit der Horizontalen einschließen, müssen dies aber nicht tun. Die Oberfläche des Ausströmerbands 4 verläuft hingegen unter einem anderen Winkel relativ zur Horizontalen, und insbesondere steiler als der erste Oberflächenabschnitt 26 und der zweite Oberflächenanschnitt 28. Die Oberfläche des Ausströmerbands 4 kann dabei einen Winkel von beispielsweise zwischen 45° und 90°, zwischen 40° und 60° oder zwischen 50° und 75° mit der Horizontalen einschließen. Auf diese Weise wird erreicht, dass das Ausströmerband 4 derart ausgerichtet ist, dass sowohl der Lichtauslass 8 funktional ist, was einen eher flachen Winkel erfordert, und dass gleichzeitig die Luftauslässe 6 als Personenanströmer genutzt werden können, was im Regelfall eine etwas steilere Ausrichtung bedingt.

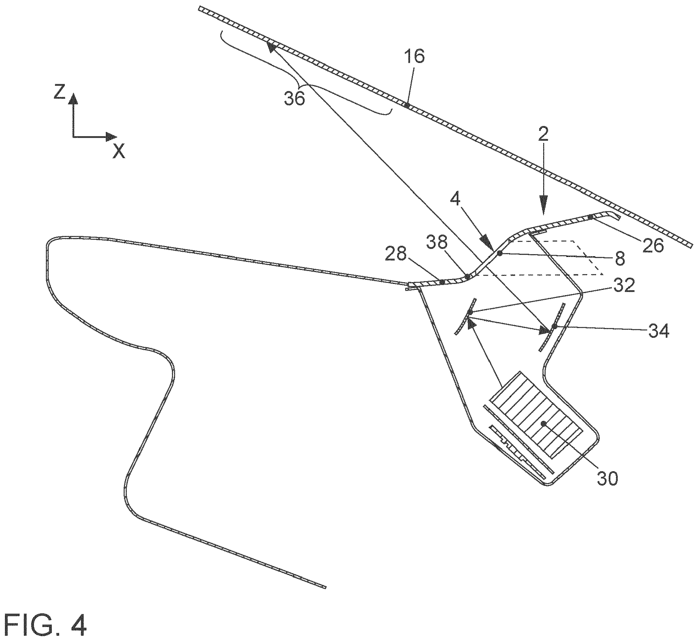

Figur 4 zeigt eine schematische Darstellung einer erfindungsgemäßen Instrumententafel in einem Längsschnitt auf Höhe des Lenkrads. Dargestellt sind die Instrumententafel 2, die Windschutzscheibe 16, das Ausströmerband 4 sowie die Projektionseinheit 30. Diese ist unterhalb der Instrumententafel 2 angeordnet und sendet Licht aus, dass von dem ersten Spiegel 32 und dem zweiten Spiel 34 reflektiert wird, den Lichtauslass 8 durchquert und schließlich im Projektionsbereich 36 von der Windschutzscheibe 16 derart reflektiert wird, dass ein Benutzer die dargestellten Informationen als Überlagerung zu der Straßenansicht wahrnimmt.

Es ist wiederum besonders gut zu erkennen, dass der erste Oberflächenabschnitt 26 der Instrumententafel 2 und der zweite Oberflächenabschnitt 28 der Instrumententafel 2 mit der Horizontalen einen Winkel einschließen, der von dem von dem Ausströmerband 4 und dabei insbesondere von dem Lichtauslass 8 mit der Horizontalen eingeschlossenen Winkel abweicht. Der Winkel, der von dem Ausströmerband 4 und der Horizontalen eingeschlossen wird, ist größer, als der Winkel, der jeweils von dem ersten Oberflächenabschnitt 26 und dem zweiten Oberflächenabschnitt 28 mit der Horizontalen eingeschlossen wird. Im dargestellten Ausführungsbeispiel beträgt er etwa 45°.

Durch die relative Anordnung von Projektionseinheit 30, Spiegeln 32 und 34, Windschutzscheibe 16 und Lichtauslass 8 wird erreicht, dass der Lichtauslass 8 trotz des relativ steilen Anstellwinkels seine Aufgabe erfüllen kann. Die dargestellte Ausführungsform ist insbesondere für moderne Fahrzeug mit flachem Anstellwinkel der Windschutzscheibe 16 geeignet.

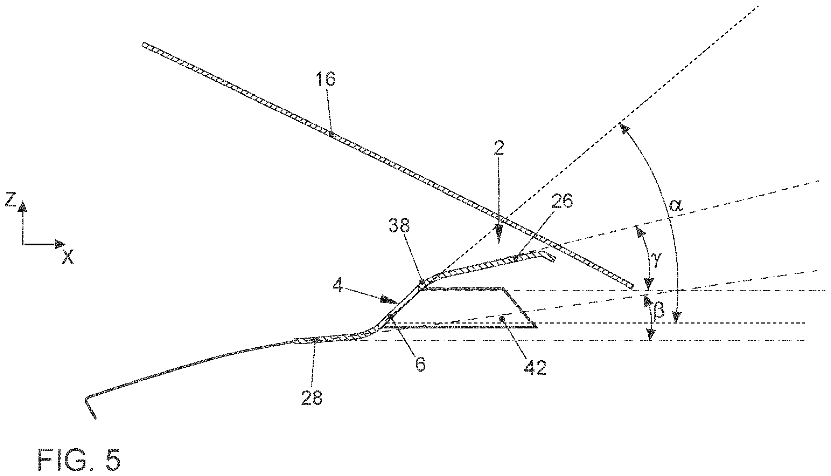

Figur 5 zeigt eine schematische Darstellung einer erfindungsgemäßen Instrumententafel 2 in einem Längsschnitt auf Höhe des Beifahrersitzes. Im Prinzip entspricht die Darstellung der in Figur 4 gezeigten Darstellung, jedoch ist keine Projektionseinheit vorhanden, da diese im Beifahrerbereich normalerweise nicht benötigt wird. Zur Verdeutlichung der unterschiedlichen Winkel der einzelnen Abschnitte der Instrumententafel 2 mit der Horizontalen sind in Figur Ziffer fünf die Winkel α, β und γ eingezeichnet. Der Winkel α wird dabei von der Horizontalen mit der dem Ausströmerband 4 eingeschlossen, der Winkel β wird von der Horizontalen mit dem zweiten Oberflächenabschnitt 28 der Instrumententafel 2 mit der Horizontalen eingeschlossen, und der Winkel γ wird von dem ersten Oberflächenabschnitt 26 der Instrumententafel zwei mit der Horizontalen eingeschlossen.

Die Winkel β und γ sind dabei jeweils kleiner als der Winkel α, der in etwa 45° beträgt. Es wird so erreicht, dass das Ausströmerband 4 relativ steil angestellt sein kann, gleichzeitig aber die Gesamthöhe der Instrumententafel 2 relativ niedrig bleibt.

In Figur 5 ist weiterhin der Luftkanal 42 dargestellt, der zur Beaufschlagung des Luftauslasses 6 mit konditionierter Luft verwendet wird.

### Bezugszeichenliste

- 2: Instrumententafel
- 4: Ausströmerband
- 6: Luftauslass
- 8: Lichtauslass
- 10: Abdeckung
- 12: Lenkrad
- 14: Kommunikationssystem
- 16: Windschutzscheibe
- 18: Fahrerbereich
- 20: Beifahrerbereich
- 22: linke Seitenscheibe
- 24: rechte Seitenscheibe
- 26: 1. Oberflächenabschnitt
- 28: 2. Oberflächenabschnitt (horizontaler, Band zwischen 1 und 2)
- 30: HUD-Einheit
- 32: Spiegel
- 34: Spiegel
- 36: Projektionsbereich
- 38: Rahmen
- 40: unteres Ausströmerband
- 42: Luftkanal
- X: Fahrtrichtung
- Y: Querrichtung
- Z: vertikale Richtung
- α: Winkel
- β: Winkel
- γ: Winkel

## Patentansprüche

1. Instrumententafel (2) für ein Kraftfahrzeug,
a. mit einer Mehrzahl von zu einem Innenraum des Kraftfahrzeugs gerichteten Luftauslässen (6),
b. und mit zumindest einem Lichtauslass (8) zur Projektion einer optischen Anzeige auf eine Windschutzscheibe (6) des Kraftfahrzeugs,
c. die Luftauslässe (6) zusammen mit dem zumindest einen Lichtauslass (8) ein durchgängiges, optisch homogenes Ausströmerband (4) bilden, **dadurch gekennzeichnet, dass** die Luftauslässe (6) als Personenanströmer ausgestaltet sind.

2. Instrumententafel (2) nach dem vorstehenden Anspruch, **dadurch gekennzeichnet, dass** in einer Fahrzeugquerrichtung (Y) gesehen beidseitig von dem Lichtauslass (8) Luftauslässe (6) angeordnet sind.

3. Instrumententafel (2) nach einem der vorstehenden Ansprüche, **dadurch gekennzeichnet, dass** der Lichtauslass (8) einen freien Querschnitt von wenigstens 50 cm² aufweist.

4. Instrumententafel (2) nach einem der vorstehenden Ansprüche, **dadurch gekennzeichnet, dass** das Ausströmerband (4) zumindest 50%, bevorzugt zumindest 65% und besonders bevorzugt zumindest 80% einer Breite der Instrumententafel (2) einnimmt.

5. Instrumententafel (2) nach einem der vorstehenden Ansprüche, **dadurch gekennzeichnet, dass** der Lichtauslass (8) und die Luftauslässe (6) einen gemeinsamen umlaufenden Rahmen (38) aufweisen, der sie zu der Oberfläche (26, 28) der Instrumententafel (2) hin begrenzt.

6. Instrumententafel (2) nach einem der vorstehenden Ansprüche, **dadurch gekennzeichnet, dass** der Lichtauslass (8) und die Luftauslässe (6) farblich und/oder vom Material her aufeinander abgestimmt sind.

7. Instrumententafel (2) nach einem der vorstehenden Ansprüche, **dadurch gekennzeichnet, dass** der Lichtauslass (8) die gleiche Ausdehnung in einer Fahrtrichtung aufweist wie die Luftauslässe (6).

8. Instrumententafel (2) nach einem der vorstehenden Ansprüche, **dadurch gekennzeichnet, dass** eine Oberfläche des Lichtauslasses (8) mit der Horizontalen (X) einen Winkel zwischen 35° und 90°, bevorzugt zwischen 50° und 90° und besonders bevorzugt zwischen 55° und 80° bildet.

9. Instrumententafel (2) nach einem der vorstehenden Ansprüche, **dadurch gekennzeichnet, dass** eine zum Innenraum des Kraftahrzeugs weisende Oberfläche (26, 28) der Instrumententafel (2) einen ersten, auf einer zur Windschutzscheibe weisenden Seite des Ausströmerbandes (4) angeordneten Abschnitt (26) und einen zweiten, auf einer zum Innenraum weisenden Seite des Ausströmerbandes (4) angeordneten Abschnitt (28) aufweist, wobei zwischen dem ersten Abschnitt (26) und dem zweiten Abschnitt (28) das Ausströmerband (4) oder ein dritter Abschnitt, in den das Ausströmerband (4) integriert ist, angeordnet ist, und wobei die Oberflächen der Luftauslässe (6) und/oder die Oberfläche des Lichtauslasses (8) jeweils einen steileren Winkel (β, γ) mit der Horizontalen (X) bilden, als der erste Abschnitt (26) und der zweite Abschnitt (28).

10. Kraftfahrzeug mit einer Instrumententafel (2) nach einem der vorstehenden Ansprüche.

## Claims

1. Instrument panel (2) for a motor vehicle,
a. comprising a plurality of air outlets (6) directed toward an interior of the motor vehicle,
b. and comprising at least one light outlet (8) for projecting an optical display onto a windshield (6) of the motor vehicle,
c. the air outlets (6) together with the at least one light outlet (8) forming a continuous, optically homogeneous outflow belt (4), **characterized in that** the air outlets (6) are designed as air vents.

2. Instrument panel (2) according to the preceding claim,
**characterized in that,** viewed in a vehicle transverse direction (Y), air outlets (6) are arranged on both sides of the light outlet (8).

3. Instrument panel (2) according to either of the preceding claims,
**characterized in that** the light outlet (8) has a free cross section of at least 50 cm².

4. Instrument panel (2) according to any of the preceding claims,
**characterized in that** the outflow belt (4) assumes at least 50%, preferably at least 65% and particularly preferably at least 80% of a width of the instrument panel (2).

5. Instrument panel (2) according to any of the preceding claims,
**characterized in that** the light outlet (8) and the air outlets (6) have a common circumferential frame (38) that bounds them to the surface (26, 28) of the instrument panel (2).

6. Instrument panel (2) according to any of the preceding claims,
**characterized in that** the light outlet (8) and the air outlets (6) are matched to one another in terms of color and/or material.

7. Instrument panel (2) according to any of the preceding claims,
**characterized in that** the light outlet (8) has the same extension in a travel direction as the air outlets (6).

8. Instrument panel (2) according to any of the preceding claims,
**characterized in that** a surface of the light outlet (8) with the horizontal (X) forms an angle between 35° and 90°, preferably between 50° and 90° and particularly preferably between 55° and 80°.

9. Instrument panel (2) according to any of the preceding claims,
**characterized in that** a surface (26, 28) of the instrument panel (2), which surface faces the interior of the motor vehicle, has a first portion (26) arranged on a side of the outflow belt (4) facing the windshield, and a second portion (28) arranged on a side of the outflow belt (4) facing the interior, the outflow belt (4) or a third portion into which the outflow belt (4) is integrated being arranged between the first portion (26) and the second portion (28), and the surfaces of the air outlets (6) and/or the surface of the light outlet (8) each forming a steeper angle (β, γ) with the horizontal (X) than the first portion (26) and the second portion (28).

10. Motor vehicle comprising an instrument panel (2) according to any of the preceding claims.

## Revendications

1. Tableau de bord (2) pour un véhicule automobile,
a. comportant une pluralité de sorties d'air (6) orientée vers un habitacle du véhicule automobile,
b. et comportant au moins une sortie de lumière (8) pour la projection d'un affichage optique sur un pare-brise (6) du véhicule automobile,
c. les sorties d'air (6) forment conjointement avec l'au moins une sortie de lumière (8) une bande d'échappement (4) continue et optiquement homogène,
**caractérisé en ce que** les sorties d'air (6) sont conçues comme des courants d'air personnels.

2. Tableau de bord (2) selon la revendication précédente,
**caractérisé en ce que** les sorties d'air (6) sont agencées vues dans une direction transversale de véhicule (Y) des deux côtés de la sortie de lumière (8).

3. Tableau de bord (2) selon l'une quelconque des revendications précédentes, **caractérisé en ce que** la sortie de lumière (8) présente une section transversale libre d'au moins 50 cm².

4. Tableau de bord (2) selon l'une quelconque des revendications précédentes, **caractérisé en ce que** la bande d'échappement (4) occupe 50 %, de préférence au moins 65 % et de manière particulièrement préférée au moins 80 % d'une largeur du tableau de bord (2).

5. Tableau de bord (2) selon l'une quelconque des revendications précédentes, **caractérisé en ce que** la sortie de lumière (8) et les sorties d'air (6) présentent un cadre périphérique commun (38), qui les délimite par rapport à la surface (26, 28) du tableau de bord (2).

6. Tableau de bord (2) selon l'une quelconque des revendications précédentes, **caractérisé en ce que** la sortie de lumière (8) et les sorties d'air (6) sont harmonisées entre elles par la couleur et/ou par le matériau.

7. Tableau de bord (2) selon l'une quelconque des revendications précédentes, **caractérisé en ce que** la sortie de lumière (8) présente la même extension dans une direction de déplacement que les sorties d'air (6).

8. Tableau de bord (2) selon l'une quelconque des revendications précédentes, **caractérisé en ce qu'**une surface de la sortie de lumière (8) forme avec l'horizontale (X) un angle entre 35° et 90°, de préférence entre 50° et 90° et de manière particulièrement préférée entre 55° et 80°.

9. Tableau de bord (2) selon l'une quelconque des revendications précédentes, **caractérisé en ce qu'**une surface (26, 28) du tableau de bord (2) tournée vers l'habitacle du véhicule automobile présente une première section (26) agencée sur un côté tourné vers le pare-brise de la bande d'échappement (4) et une deuxième section (28) agencée sur un côté tourné vers l'habitacle de la bande d'échappement (4), dans lequel entre la première section (26) et la seconde section (28) la bande d'échappement (4) ou une troisième section, dans laquelle la bande d'échappement (4) est intégrée, est agencée et dans lequel les surfaces des sorties d'air (6) et/ou la surface de la sortie de lumière (8) forment respectivement un angle plus raide (β, γ) avec l'horizontale (X) que la première section (26) et la seconde section (28).

10. Véhicule automobile comportant un tableau de bord (2) selon l'une quelconque des revendications précédentes.
